# EUROPEAN PATENT SPECIFICATION

(11) **EP 3 301 006 B1**
(45) Date of publication and mention of the grant of the patent: **07.08.2019**
(21) Application number: 17174733.0
(22) Date of filing: 07.06.2017
(51) Int. Cl.: B62K 21/22, B62J 99/00

(54) **STRADDLED VEHICLE**
GRÄTSCHSITZFAHRZEUG
VÉHICULE À ENFOURCHER

(30) Priority: 28.09.2016 JP 2016189544
(43) Date of publication of application: 04.04.2018
(73) Proprietor: Yamaha Hatsudoki Kabushiki Kaisha (Yamaha Motor Co., Ltd.), Shizuoka 438-8501 (JP)
(72) Inventor: Aoba, Shunsuke, lwata-shi, Shizuoka 438-8501 (JP)
(74) Representative: Stöckeler, Ferdinand

(56) References cited:
- EP-A1- 2 738 073
- CN-U- 204 623 649
- JP-A- 2004 122 862
- US-A1- 2008 284 129

## Description

### BACKGROUND OF THE INVENTION

### Field of the Invention

The present invention relates to a straddled vehicle that includes a handle bar.

### Description of Related Art

A handle of a straddled vehicle is fixed to a handle crown (an upper bracket) that couples a pair of fork tubes to each other, for example. In an upper bracket described in JP 5580771 B2, two pairs of left and right attachment holes that penetrate the upper bracket in the top-and-bottom direction are formed in front and rear portions, for example. A handle is attached to any one pair of left and right handle holders. Each handle holder includes upper and lower holder members that hold the handle therebetween. A user can change a position of the handle in a front-and-rear direction by selectively inserting bolt portions of the lower holder member of the pair of left and right handle holders into any one pair of the pair of left and right attachment holes located in the front portions and the pair of left and right attachment holes located in the rear portions.

US 2008/0284129 A1 discloses another mechanism for attaching a handlebar to a straddled vehicle with which a user can change a position of the handlebar in a front-and-rear direction.

### BRIEF SUMMARY OF THE INVENTION

In a configuration described in the above-mentioned JP 5580771 B2, when changing the position of the handle, the user respectively insert the two bolt portions of the two lower holder members into the pair of left and right attachment holes in the front or rear portions. Thereafter, it is necessary for the user to respectively adjust orientations of the pair of lower holder members, install the handle on the pair of lower holder members, and then attach the pair of upper holder members to the pair of lower holder members. Adjusting the orientations of the pair of lower holder members is cumbersome.

Further, a distance between a front attachment position and a rear attachment position of the handle is determined by a pitch between the front and rear attachment holes. The upper bracket is rotated with a handle operation of the user, so that it is not preferable to increase the size of the upper bracket. Therefore, it is difficult to increase the distance between the front attachment position and the rear attachment position of the handle.

An object of the present invention is to provide a straddle vehicle in which an attachment position of a handle bar can be changed with a simple operation and an amount of change of the attachment position of the handle bar can be increased.
(1) A straddled vehicle according to one aspect of the present invention includes a handle crown, a handle bar, a pair of left and right holding members that holds the handle bar at the handle crown, and a pair of fastening members that fastens the pair of holding members to the handle crown, wherein the handle crown has a pair of left and right fixing portions to which the pair of holding members are respectively fixed, a first guide portion, a first fixing hole, a second fixing hole, a third fixing hole, a fourth fixing hole and a second guide portion are arranged in order in each of the pair of fixing portions in one direction, which is a vehicle front-and-rear direction in a vehicle plan view, each of the pair of holding members includes an upper holder and a lower holder that sandwich the handle bar from above and below, a portion to be guided, a first through hole, a convex portion and a second through hole are arranged in order in the lower holder in the one direction, a third through hole and a fourth through hole are arranged in order in the upper holder in the one direction, a center axis of the handle bar is located between a center of the convex portion and the portion to be guided in the one direction, the lower holder is selectively attachable to the handle crown according to a first positional relationship or a second positional relationship, each of the pair of fastening members includes first and second shaft members, in the first positional relationship, the portion to be guided is positioned at the first guide portion, the convex portion is inserted into the second fixing hole, the first shaft member is inserted into the first fixing hole through one of the third and fourth through holes, and the first through hole, and the second shaft member is inserted into the third fixing hole through another one of the third and fourth through holes, and the second through hole, and in the second positional relationship, the portion to be guided is positioned at the second guide portion, the convex portion is inserted into the third fixing hole, the first shaft member is inserted into the second fixing hole through one of the third and fourth through holes, and the second through hole, and the second shaft member is inserted into the fourth fixing hole through another one of the third and fourth through holes, and the first through hole.
   In the straddled vehicle, the user can attach the lower holders of the pair of left and right holding members to the pair of left and right fixing portions of the handle crown according to the first positional relationship or the second positional relationship. Thus, a position of the handle bar in the one direction can be changed. In the case where attaching each lower holder to each fixing portion according to the first positional relationship, the user positions the portion to be guided of the lower holder at the first guide portion of the fixing portion and inserts the convex portion of the lower holder into the second fixing hole of the fixing portion. Thus, orientations of the pair of lower holders are automatically determined. In this state, the user can install the handle bar and the pair of upper holders at the pair of lower holders, and fix the pair of upper holders and the pair of lower holders to the pair of fixing portions of the handle crown by the first and second shaft members. In this case, the user can simultaneously attach the handle bar to the holding members and fix the holding members to the fixing members. On the other hand, in the case where attaching each lower holder to each fixing portion according to the second positional relationship, the user positions the portion to be guided of the lower holder at the second guide portion of the fixing portion, and inserts the convex portion of the lower holder into the third fixing hole of the fixing portion. Thus, the orientations of the pair of lower holders are automatically determined. In this state, the user can install the handle bar and the pair of upper holders at the pair of lower holders, and can fix the pair of upper holders and the pair of lower holders to the pair of fixing portions of the handle crown by the first and second shaft members. In this case, the user can simultaneously attach the handle bar to the holding members and fix the holding members to the fixing members.
   In the first positional relationship, a center axis of the handle bar is located between the second fixing hole and the first guide portion in the one direction. In the second positional relationship, the center axis of the handle bar is located between the third fixing hole and the second guide portion in the one direction. Therefore, a distance between the attachment positions of the handle bar in the first and second positional relationships is larger than a distance between center axes of the second and third fixing holes.
   As a result, the user can change the attachment position of the handle bar with a simple operation and increase an amount of change of the attachment position of the handle bar without an increase of the size of the handle crown.
(2) The center axis of the handle bar may be located between the center of the convex portion and the first through hole in the one direction.
   In this case, the handle bar is located between the first and second shaft members in the one direction. Thus, the handle bar is stably fixed by the pair of holding members and the pair of fastening members.
(3) The first and second guide portions may be formed in a concave shape, and the portion to be guided may be formed in a convex shape.
   In this case, each lower holder is easily attached to each fixing portion according to the first or second positional relationship.
(4) Each of the first and second shaft members may be a bolt having a head and a shank, inner peripheral surfaces of the first, second, third and fourth fixing holes may have female threads, and the shanks of the first and second shaft members may have male threads corresponding to the female threads.
   In this case, it is possible to attach each of the plurality of bolts to a corresponding fixing hole without using a nut. Therefore, the attachment position of the handle bar is more easily changed.
(5) The straddled vehicle may further include a handle cover, wherein the handle cover may include a lower cover attached to the handle bar to be located at a position further downward than the handle bar, and an upper cover located at a position further upward than the handle bar.
   In this case, the handle bar is protected by the handle cover.
(6) The upper cover may have an upper opening at a position further upward than a portion of the handle bar between the pair of holding members.
   In this case, the user can easily confirm the attachment position of the handle bar through the upper opening.
(7) The straddled vehicle may further include a first apparatus holding structure capable of holding a first apparatus, wherein the first apparatus holding structure may be attachable to a portion of the handle bar exposed from the upper opening.
   In this case, the first apparatus can be attached to a position where the first apparatus is easily viewed or operated by a rider.
(8) The upper cover may have a front opening at a position further forward than the portion of the handle bar between the pair of holding members.
   In this case, the user can effectively utilize the front opening of the upper cover as a working space when attaching the first apparatus to the handle bar. Therefore, the first apparatus is easily attached.
(9) The handle cover may further include an auxiliary cover detachably attached to at least one of the upper cover and the lower cover to close the opening.
   In this case, the portion of the handle bar between the pair of holding members is protected by the auxiliary cover.
(10) The upper cover may be configured to be detachable from the lower cover.
   In this case, the handle bar and its peripheral members are easily maintained.
(11) The straddled vehicle may further include a second apparatus holding structure capable of holding a second apparatus, wherein the second apparatus holding structure may be attachable to an exposed portion of the handle bar with the upper cover detached from the lower cover.
   In this case, the second apparatus can be attached to a position where the second apparatus is easily viewed or operated by the rider.

### BRIEF DESCRIPTION OF THE SEVERAL VIEWS OF THE DRAWING

Fig. 1 is a schematic side view showing a schematic configuration of a motorcycle according to one embodiment of the present invention;
Fig. 2 is a diagram partially showing the appearance of the motorcycle as viewed from a rider when the rider views a handle device obliquely downward and forward of the vehicle from a position further upward than a seat;
Fig. 3(a) is a plan view of a handle crown;
Fig. 3(b) is a side view of the handle crown of Fig. 3(a) as viewed in a direction of an arrow A;
Fig. 3(c) is a partially enlarged cross sectional view of the handle crown taken along the line B-B of Fig. 3(b);
Fig. 4(a) is a plan view of a lower holder;
Fig. 4(b) is a side view of the lower holder of Fig. 4(a) as viewed in a direction of an arrow C;
Fig. 4(c) is a side view of the lower holder of Fig. 4(a) as viewed in a direction of an arrow D;
Fig. 5(a) is a plan view of an upper holder;
Fig. 5(b) is a side view of the upper holder of Fig. 5(a) as viewed in a direction of an arrow E;
Fig. 5(c) is a side view of the upper holder of Fig. 5(a) as viewed in a direction of an arrow F;
Fig. 6(a) is a longitudinal cross sectional view showing an attachment state of a handle bar when the lower holder is attached to a fixing portion according to a first positional relationship;
Fig. 6(b) is a longitudinal cross sectional view showing an attachment state of the handle bar when the lower holder is attached to the fixing portion according to a second positional relationship;
Fig. 7 is a schematic side view for explaining effects of a holding structure of the handle bar in a holding member;
Figs. 8(a) to 8(c) are plan views showing one example of a method of changing an attachment position of the handle bar;
Figs. 9(a) and 9(b) are plan views showing one example of the method of changing the attachment position of the handle bar;
Fig. 10 is a diagram showing an example in which a holding device is provided at a portion of the handle bar between the pair of holding members; and
Fig. 11 is a diagram showing an example in which a plurality of holding devices are provided at a portion of the handle bar between a pair of switch units.

### DESCRIPTION OF THE PREFERRED EMBODIMENTS

A straddled vehicle according to one embodiment of the present invention will be described below with reference to the drawings. In the following description, a motorcycle is described as one example of the straddled vehicle.

### (1) Schematic Configuration of Motorcycle

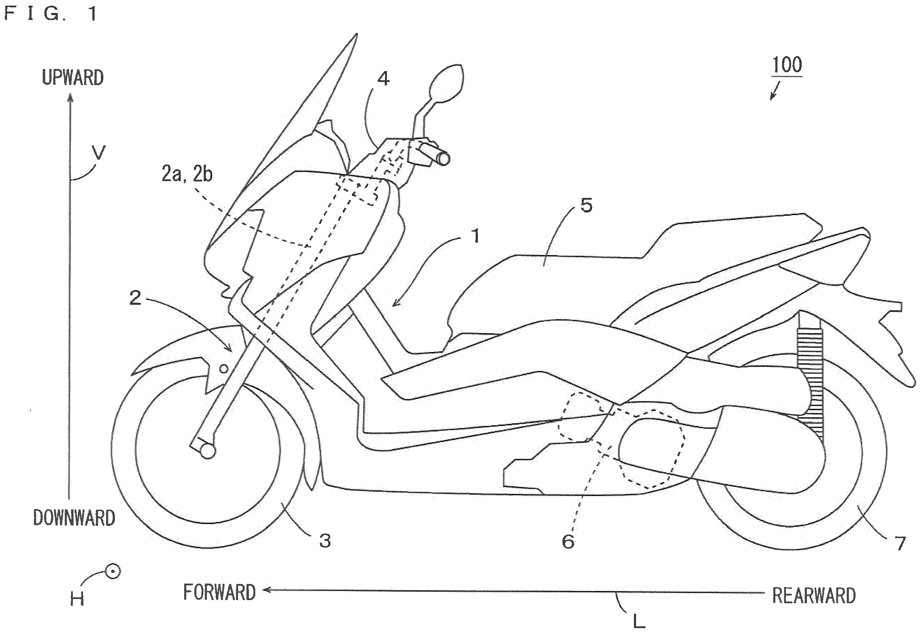

Fig. 1 is a schematic side view showing the schematic configuration of the motorcycle according to the one embodiment of the present invention. In Fig. 1, the motorcycle 100 standing up to be perpendicular to the road surface is shown. In Fig. 1 and part of subsequent given diagrams, arrows suitably indicate a front-and-rear direction L, a left-and-right direction H and a top-and-bottom direction V of the motorcycle 100. In the following description, a direction in which an arrow is directed in the front-and-rear direction L is referred to as forward, and its opposite direction is referred to as rearward. Further, a direction in which an arrow is directed in the left-and-right direction H is referred to as leftward, and its opposite direction is referred to as rightward. Further, a direction in which an arrow is directed in the top-and-bottom direction V is referred to as upward, and its opposite direction is referred to as downward.

In the motorcycle 100 of Fig. 1, a front fork 2 is provided in a front portion of a vehicle body 1. The front fork 2 includes a pair of left and right fork tubes 2a, 2b. A handle device 4 is attached to upper ends of the pair of fork tubes 2a, 2b, and a front wheel 3 is rotatably attached to lower ends of the pair of fork tubes 2a, 2b.

A seat 5 is provided at an upper portion of substantially the center of the vehicle body 1. Further, an engine 6 is provided in a lower portion of the vehicle body 1. A rear wheel 7 is rotatably attached to a lower portion of a rear end of the vehicle body 1. The rear wheel 7 is rotated by motive power generated by the engine 6.

In the following description, the front fork 2 is fixed with a center axis, extending in a circumferential direction, of the front wheel 3 located at the center of the motorcycle 100 in the left-and-right direction H.

### (2) Handle Device

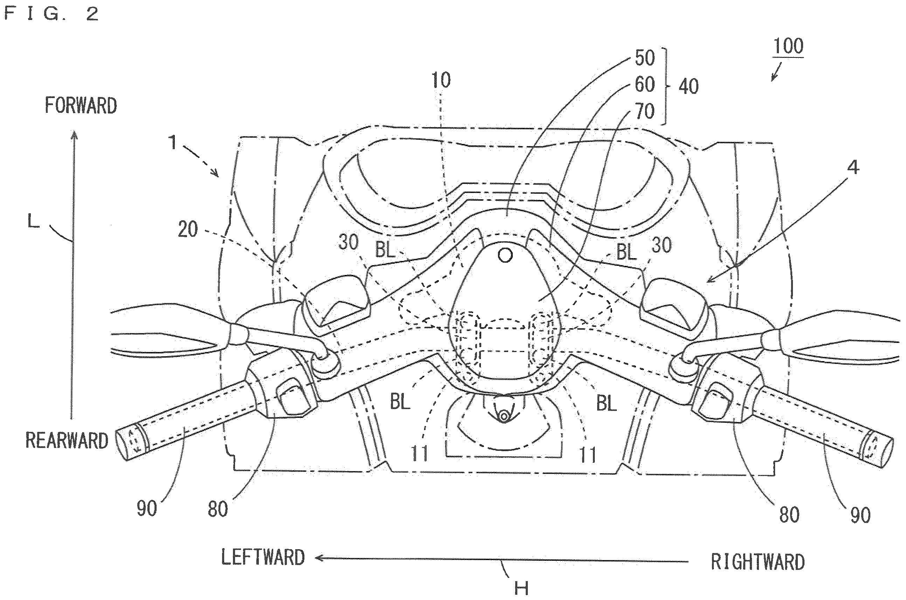

Fig. 2 is a diagram partially showing the appearance of the motorcycle 100 as viewed by a rider when the rider views the handle device 4 obliquely forward and downward of the vehicle from a position further upward than the seat 5. In Fig. 2, of the motorcycle 100, solid lines indicate the handle device 4, and one-dot and dash lines indicate portions of the vehicle body 1 except for the handle device 4. Further, dotted lines indicate part of an inner structure of the handle device 4. As shown in Fig. 2, the handle device 4 includes a handle crown 10, a handle bar 20, a pair of left and right holding members 30, a handle cover 40, a pair of left and right switch units 80, a pair of left and right grips 90 and a plurality of bolts BL.

The handle crown 10 is located at the center of the motorcycle 100 in the left-and-right direction H and connected to the pair of fork tubes 2a, 2b of Fig. 1. Further, a steering shaft (not shown) is attached to the handle crown 10. Further, a pair of left and right fixing portions 11 is formed at the handle crown 10. Details of the structure of the handle crown 10 will be described below.

The pair of holding members 30 is attached on the pair of fixing portions 11 of the handle crown 10 by the plurality (four in the present example) of bolts BL. In this state, the metallic handle bar 20 is held by the pair of holding members 30, and the pair of holding members 30 is fixed to the pair of fixing portions 11, respectively. The handle bar 20 of the present example is constituted by a single pipe that extends to the left and right through the center of the motorcycle 100 in the left-and-right direction H.

In the motorcycle 100 according to the present embodiment, it is possible to change an attachment position of the handle bar 20 by changing an attachment state of the pair of holding members 30 to the handle crown 10. Details of the change of the attachment position of the handle bar 20 will be described below.

The pair of grips 90 having a constant length is provided at both ends of the handle bar 20. Further, the pair of switch units 80 is provided at the handle bar 20 to be respectively adjacent to the pair of grips 90. The pair of switch units 80 is provided with a switch for changing a light irradiation direction of a headlamp up and down, a switch for blinking a turn indicator (not shown), a switch for starting the engine 6 and a switch for stopping the engine 6, for example.

A portion of the handle bar 20 between the pair of switch units 80 is stored in the handle cover 40. The handle cover 40 includes a lower cover 50, an upper cover 60 and an auxiliary cover 70.

The lower cover 50 is attached to the handle bar 20 to be located at a position further downward than the handle bar 20, and the upper cover 60 is attached to the lower cover 50 to be located at a position further upward than the handle bar 20. Thus, the handle bar 20 is protected by the lower cover 50 and the upper cover 60.

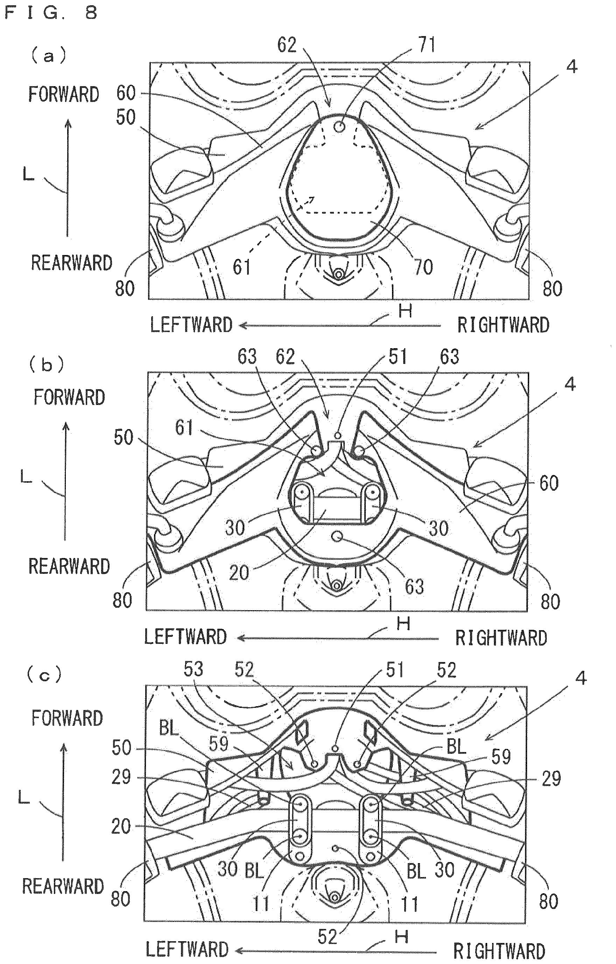

An upper opening 61 (Fig. 8(b)) and a front opening 62 (Fig. 8(b)) are formed in the upper cover 60. The auxiliary cover 70 is attached to the lower cover 50 to close the upper opening 61 (Fig. 8(b)) and the front opening 62 (Fig. 8(b)) of the upper cover 60. Thus, a portion of the handle bar 20 exposed from the upper cover 60 is protected by the auxiliary cover 70.

The auxiliary cover 70 is configured to be detachable from the lower cover 50, and the upper cover 60 is configured to be detachable from the lower cover 50. Further, the lower cover 50 is configured to be detachable from the handle bar 20. A user can disassemble the handle device 4 and easily perform various types of maintenance by detaching the auxiliary cover 70, the upper cover 60 and the lower cover 50 in order.

### (3) Structure of Handle Crown and Holding Member

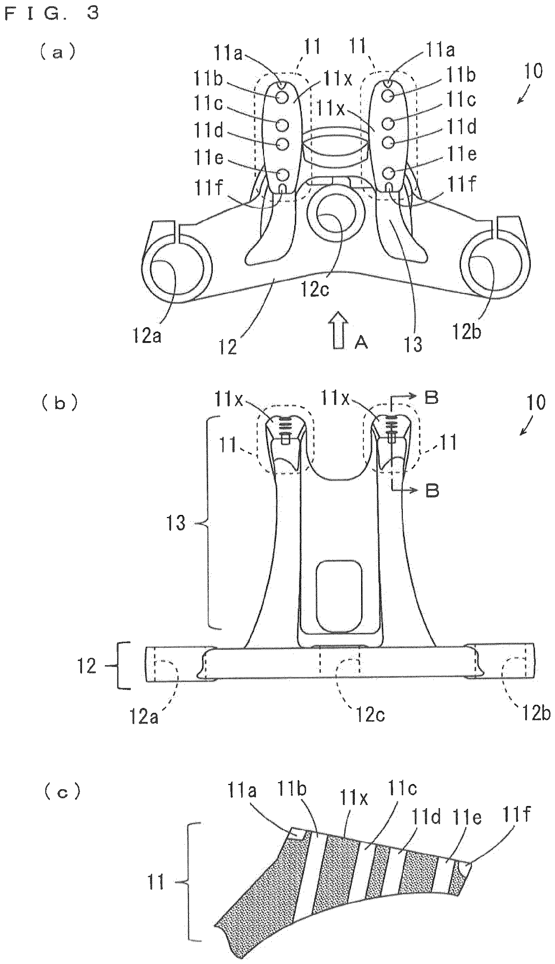

Fig. 3(a) is a plan view of the handle crown 10, Fig. 3(b) is a side view of the handle crown 10 of Fig. 3(a) as viewed in a direction of an arrow A, and Fig. 3(c) is a partially enlarged cross sectional view of the handle crown 10 taken along the line B-B of Fig. 3(b). A scale reduction ratio of the cross sectional view of Fig. 3(c) is different from that of each of the plan view and the side view of Figs. 3(a) and 3(b).

As shown in Figs. 3(a) and 3(b), the handle crown 10 has a coupler 12 and a support pole 13. The coupler 12 has a flat plate shape that extends in one direction while being curved in a center portion. A pair of attachment holes 12a, 12b that penetrates the coupler 12 in the top-and-bottom direction is respectively formed at both ends of the coupler 12. An attachment hole 12c that penetrates the coupler 12 in the top-and-bottom direction is formed in the center portion of the coupler 12.

When the handle crown 10 is attached to the vehicle body 1, the upper ends of the pair of fork tubes 2a, 2b of Fig. 1 are respectively inserted into the pair of attachment holes 12a, 12b. Further, a steering shaft (not shown) is inserted into the attachment hole 12c.

The support pole 13 is formed to extend upward from a portion of the coupler 12 in the vicinity of the attachment hole 12c. An upper end of the support pole 13 branches into two. These upper ends respectively constitute the pair of fixing portions 11 of Fig. 2. The pair of fixing portions 11 is arranged to be spaced apart from each other in the left-and-right direction H with the handle crown 10 attached to the vehicle body 1.

As shown in Figs. 3(a) and 3(c), each fixing portion 11 has a flat placement surface 11x. The placement surface 11x is held to be directed obliquely upward, rearward and towards a position further upward than the seat 5 with the handle crown 10 attached to the vehicle body 1.

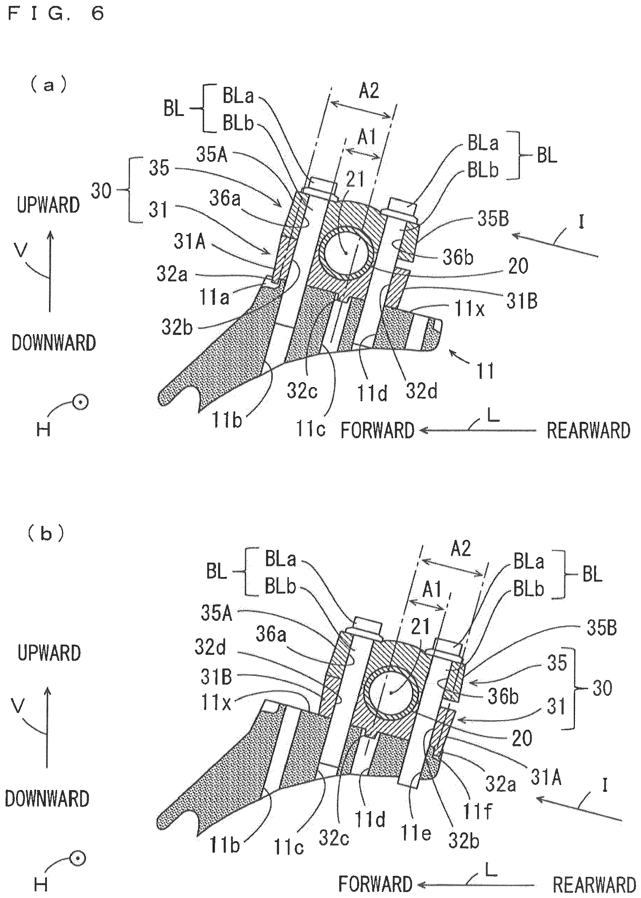

The placement surface 11x is formed to extend in one direction. In the placement surface 11x, a first concave portion 11a, a first fixing hole 11b, a second fixing hole 11c, a third fixing hole 11d, a fourth fixing hole 11e and a second concave portion 11f are arranged in this order in the direction in which the placement surface 11x extends. Each of the first to fourth fixing holes 11b to 11e has a common inner diameter. Further, each of inner peripheral surfaces of the first to fourth fixing holes 11b to 11e has a female thread corresponding to a male thread formed at a shank BLb (Figs. 6(a) and 6(b)) of each bolt BL of Fig. 2. The first and second concave portions 11a, 11f are located at both ends of the placement surface 11x in the direction in which the placement surface 11x extends.

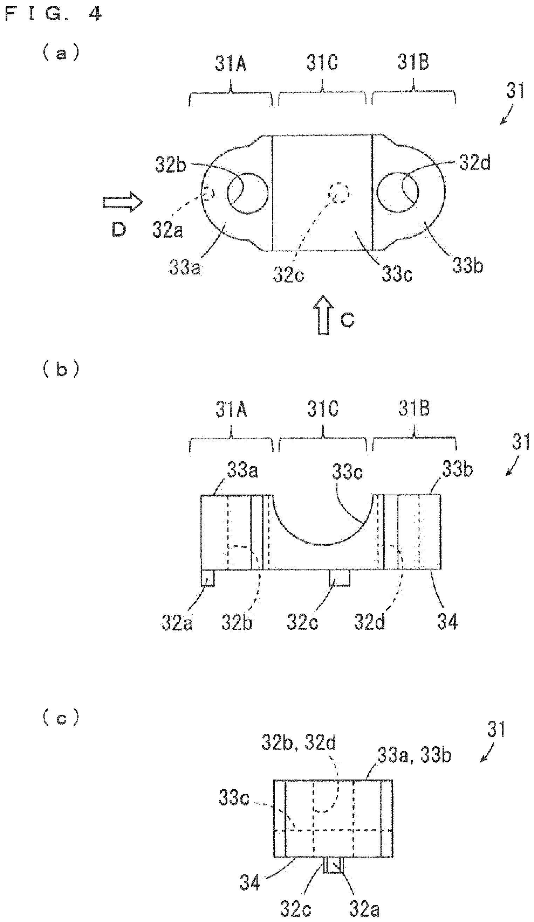

Each of the pair of holding members 30 of Fig. 2 includes an upper holder and a lower holder that sandwiches the handle bar 20 from above and below. Fig. 4(a) is a plan view of the lower holder, Fig. 4(b) is a side view of the lower holder 31 of Fig. 4(a) as viewed in a direction of an arrow C, and Fig. 4(c) is a side view of the lower holder 31 of Fig. 4(a) as viewed in a direction of an arrow D.

As shown in Figs. 4(a) to 4(c), the lower holder 31 includes bolt insertion portions 31A, 31B and a bar support portion 31C. The bar support portion 31C is located between the bolt insertion portions 31A, 31B. The bolt insertion portions 31A, 31B have flat upper surfaces 33a, 33b, respectively. The upper surfaces 33a, 33b are located on the same plane. The bar support portion 31C has a concave-shape upper surface 33c capable of supporting a lower half of the handle bar 20. Further, the bolt insertion portions 31A, 31B and the bar support portion 31C have a common flat lower surface 34.

A first through hole 32b and a second through hole 32d that respectively penetrate the lower holder 31 in the top-and-bottom direction are respectively formed in the bolt insertion portions 31A, 31B. Further, a first convex portion 32a is formed at a portion of the lower surface 34 in the bolt insertion portion 31A, and a second convex portion 32c is formed at a portion of the lower surface 34 in the bar support portion 31C. The first convex portion 32a, the first through hole 32b, the second convex portion 32c and the second through hole 32d are arranged in this order on a straight line.

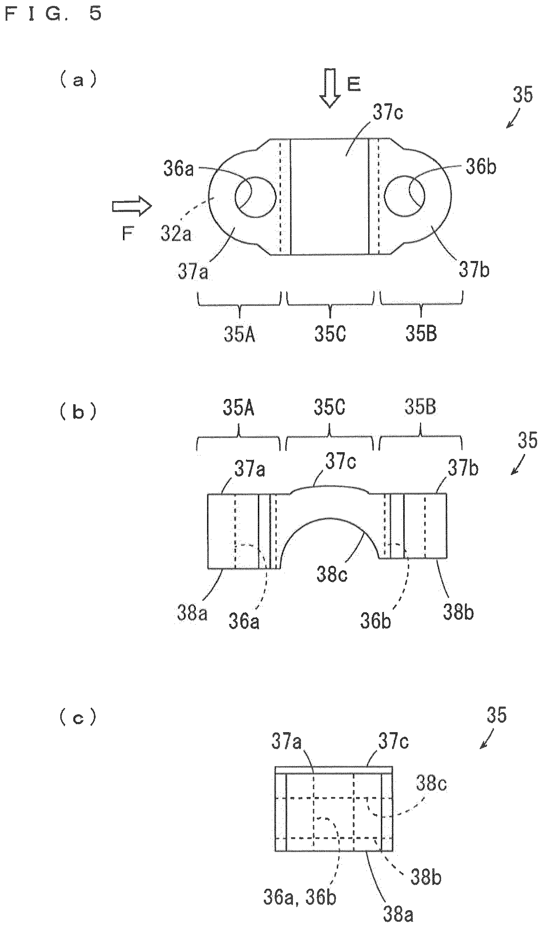

Fig. 5(a) is a plan view of the upper holder, Fig. 5(b) is a side view of the upper holder 35 of Fig. 5(a) as viewed in a direction of an arrow E, and Fig. 5(c) is a side view of the upper holder 35 of Fig. 5(a) as viewed in a direction of an arrow F.

As shown in Figs. 5(a) to 5(c), the upper holder 35 includes bolt insertion portions 35A, 35B and a bar support portion 35C. The bar support portion 35C is located between the bolt insertion portions 35A, 35B. The bolt insertion portions 35A, 35B have flat upper surfaces 37a, 37b, respectively. The upper surfaces 37a, 37b are located on the same plane and function as bearing surfaces that support the heads BLa (Figs. 6(a) and 6(b)) of the bolts BL of Fig. 2. Further, the bolt insertion portions 35A, 35B have flat lower surfaces 38a, 38b, respectively. The lower surfaces 38a, 38b are respectively located on two different planes that deviate from each other in the top-and-bottom direction. Thus, the thickness of the bolt insertion portion 35A is larger than the thickness of the bolt insertion portion 35B.

The bar support portion 35C has an upper surface 37c that is curved upward in a convex shape. Further, the bar support portion 35C has a concave-shape lower surface 38c capable of supporting an upper half of the handle bar 20.

A third through hole 36a and a fourth through hole 36b that respectively penetrate the upper holder 35 in the top-and-bottom direction are respectively formed in the bolt insertion portions 35A, 35B. The third and fourth through holes 36a, 36b are arranged in this order on a straight line.

In the above-mentioned configuration, a distance between a center axis of the first fixing hole 11b and a center axis of the third fixing hole 11d in each fixing portion 11 of the handle crown 10, a distance between a center axis of the second fixing hole 11c and a center axis of the fourth fixing hole 11e in each fixing portion 11 of the handle crown 10, a distance between a center axis of the first through hole 32b and a center axis of the second through hole 32d in the lower holder 31, and a distance between a center axis of the third through hole 36a and a center axis of the fourth through hole 36b in the upper holder 35 are set equal to one another.

Further, dimensions of each fixing portion 11 and each lower holder 31 are set such that the first convex portion 32a and the second convex portion 32c of the lower holder 31 can respectively and simultaneously be inserted into the first concave portion 11a and the second fixing hole 11c. Further, these dimensions are set such that the first convex portion 32a and the second convex portion 32c of the lower holder 31 can respectively and simultaneously be inserted into the second concave portion 11f and the third fixing hole 11d. The second convex portion 32c of the present example is columnar and has an outer diameter slightly smaller than an inner diameter of each of the second fixing hole 11c and the third fixing hole 11d.

When the handle bar 20 is attached to the handle crown 10, the lower holder 31 is installed on each fixing portion 11. Further, the upper holder 35 is installed on the lower holder 31 with the handle bar 20 sandwiched therebetween. Thereafter, the lower holder 31 and the upper holder 35 are fixed to the fixing portion 11 by two bolts BL.

The lower holder 31 of the holding member 30 according to the present embodiment can be selectively attached to the fixing portion 11 according to a first positional relationship or a second positional relationship. Fig. 6(a) is a longitudinal cross sectional view showing an attachment state of the handle bar 20 when the lower holder 31 is attached to the fixing portion 11 according to the first positional relationship, and Fig. 6(b) is a longitudinal cross sectional view showing an attachment state of the handle bar 20 when the lower holder 31 is attached to the fixing portion 11 according to the second positional relationship.

Each of Figs. 6(a) and 6(b) shows a longitudinal cross sectional view in the case where the fixing portion 11 and its vicinity are cut along a vertical plane extending in the front-and-rear direction L. Further, in Figs. 6(a) and 6(b), an arrow indicates a direction in parallel to the placement surface 11x of the fixing portion 11 and in parallel to the vertical plane as an inclination direction I. The inclination direction I is the front-and-rear direction L in a plan view of the vehicle.

As shown in Fig. 6(a), in the case where the lower holder 31 is attached to the fixing portion 11 according to the first positional relationship, the bolt insertion portion 31A of the lower holder 31 is located at a position further forward than the bolt insertion portion 31B in the front-and-rear direction L. In this state, the first convex portion 32a and the second convex portion 32c of the lower holder 31 are inserted into the first concave portion 11a and the second fixing hole 11c of the fixing portion 11. The handle bar 20 is provided on the lower holder 31.

The upper holder 35 is provided on the lower holder 31 and the handle bar 20 such that the bolt insertion portion 35A is located at a position further forward than the bolt insertion portion 35B in the front-and-rear direction L. Further, a shank BLb of one bolt BL is attached to the first fixing hole 11b of the fixing portion 11 through the third through hole 36a of the upper holder 35 and the first through hole 32b of the lower holder 31. Further, a shank BLb of another bolt BL is attached to the third fixing hole 11d of the fixing portion 11 through the fourth through hole 36b of the upper holder 35 and the second through hole 32d of the lower holder 31. Thus, the handle bar 20 is fixed on the fixing portion 11 together with the upper holder 35 and the lower holder 31.

On the other hand, as shown in Fig. 6(b), in the case where the lower holder 31 is attached to the fixing portion 11 according to the second positional relationship, the bolt insertion portion 31B of the lower holder 31 is located at a position further forward than the bolt insertion portion 31A in the front-and-rear direction L. In this state, the first convex portion 32a and the second convex portion 32c of the lower holder 31 are inserted into the second concave portion 11f and the third fixing hole 11d of the fixing portion 11. The handle bar 20 is provided on the lower holder 31.

Similarly to the example of Fig. 6(a), the upper holder 35 is provided on the lower holder 31 and the handle bar 20 such that the bolt insertion portion 35A is located at a position further forward than the bolt insertion portion 35B in the front-and-rear direction L. Further, a shank BLb of one bolt BL is attached to the second fixing hole 11c of the fixing portion 11 through the third through hole 36a of the upper holder 35 and the second through hole 32d of the lower holder 31. Further, a shank BLb of another bolt BL is attached to the fourth fixing hole 11e of the fixing portion 11 through the fourth through hole 36b of the upper holder 35 and the first through hole 32b of the lower holder 31. Thus, the handle bar 20 is fixed on the fixing portion 11 together with the upper holder 35 and the lower holder 31.

As shown in Figs. 6(a) and 6(b), the holding member 30 is formed such that a center axis 21 of the held handle bar 20 is located in a range A1 between the first through hole 32b and a center of the second convex portion 32c in the inclination direction I. In this case, in the inclination direction I, the handle bar 20 is located between the two bolts BL. Thus, the handle bar 20 is stably fixed by the holding member 30 and the two bolts BL.

Further, the holding member 30 is formed such that the center axis 21 of the held handle bar 20 is located in a range A2 between the first convex portion 32a and a center of the second convex portion 32c in the inclination direction I. In other words, the holding member 30 is formed such that the center axis 21 of the handle bar 20 is held at a position deviating from the center of the second convex portion 32c towards the first convex portion 32a in the inclination direction I.

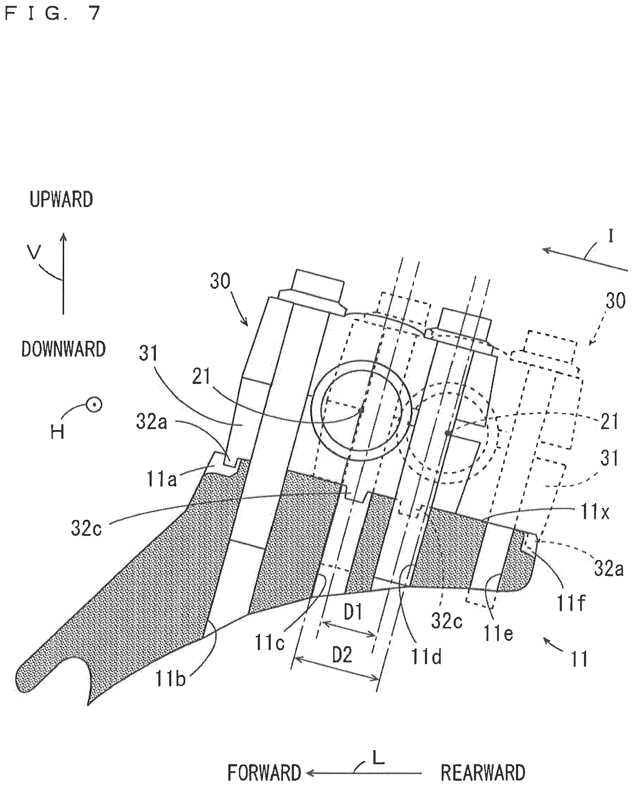

Fig. 7 is a schematic side view for explaining an effect of a holding structure of the handle bar 20 in the holding member 30. In Fig. 7, solid lines indicate the holding member 30 and the handle bar 20 in the case where the lower holder 31 is attached to the fixing portion 11 according to the first positional relationship. Further, dotted lines indicates the holding member 30 and the handle bar 20 in the case where the lower holder 31 is attached to the fixing portion 11 according to the second positional relationship.

As shown in Fig. 7, in the above-mentioned configuration, in the case where the lower holder 31 is attached to the fixing portion 11 according to the first positional relationship, the center axis 21 of the handle bar 20 is located between the center axis of the second fixing hole 11c and the first concave portion 11a in the inclination direction I. On the other hand, in the case where the lower holder 31 is attached to the fixing portion 11 according to the second positional relationship, the center axis of the handle bar 20 is located between the center axis of the third fixing hole 11d and the second concave portion 11f in the inclination direction I. Therefore, in the inclination direction I, a distance D2 between the attachment positions of the handle bar 20 according to the first and second positional relationships is larger than a distance D1 between the center axes of the second and third fixing holes 11c, 11d. Thus, the attachment positions of the handle bar 20 are largely different from each other in the inclination direction I between the first and second positional relationships.

### (4) Method of Changing Attachment Position of Handle Bar

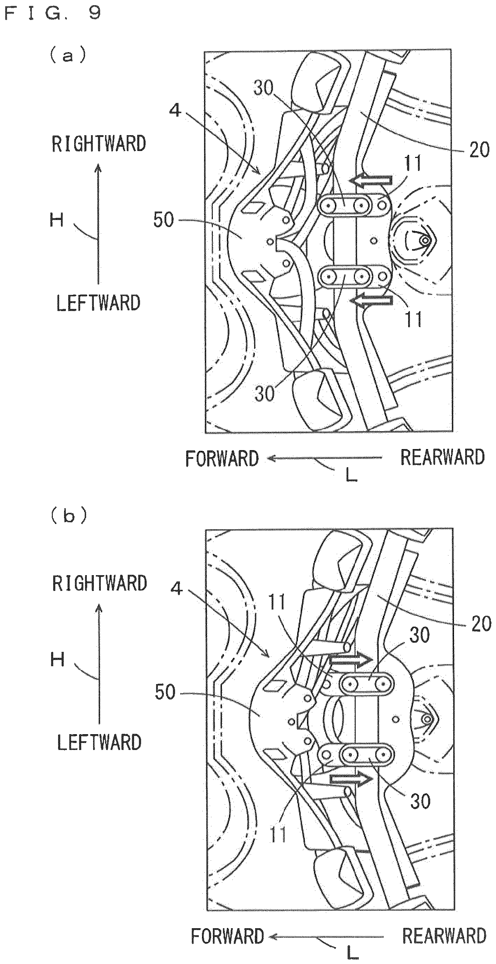

The method of changing the attachment position of the handle bar will be described together with the structure of the handle cover 40. Figs. 8(a) to 9(b) are plan views showing one example of the method of changing the attachment position of the handle bar 20. Similarly to the example of Fig. 2, each of Figs. 8(a) to 8(c), 9(a) and 9(b) partially shows the appearance of the motorcycle 100 as viewed by the rider when the rider views the handle device 4 obliquely forward and downward of the vehicle from a position further upward than the seat 5. Further, one-dot and dash lines indicate portions of the vehicle body 1 except for the handle device 4 of the motorcycle 100. Further, a thick solid line indicates an outer edge of the auxiliary cover 70 in Fig. 8(a), thick solid lines indicate an outer edge of the upper cover 60 in Fig. 8(b), and thick solid lines indicate an outer edge of the lower cover 50 in Fig. 8(c).

It is necessary to first disassemble the handle cover 40 when the attachment position of the handle bar 20 is changed. When the handle cover 40 is disassembled, the auxiliary cover 70 and the upper cover 60 are detached in order as described above.

Fig. 8(a) shows the handle device 4 before the auxiliary cover 70 and the upper cover 60 are detached. As shown in Fig. 8(a), the auxiliary cover 70 covers part of the upper cover 60, the upper opening 61 and the front opening 62, described below, of the upper cover 60 from above in a region including the center of the handle device 4 and its vicinity. Thus, the upper opening 61 and the front opening 62 of the upper cover 60 are closed by the auxiliary cover 70. The auxiliary cover 70 is fixed to the lower cover 50 by one bolt 71, for example. The user can easily detach the auxiliary cover 70 by detaching the bolt 71 from an attachment hole 51 (Fig. 8(b)) formed in the lower cover 50.

Fig. 8(b) shows the handle device 4 after the auxiliary cover 70 is detached from the handle device 4 of Fig. 8(a) and before the upper cover 60 is detached. As shown in Fig. 8(b), the upper cover 60 extends in the left-and-right direction H while being curved in the front-and-rear direction L between the pair of switch units 80. The upper opening 61 of the upper cover 60 is formed to be located at a position further upward than a portion of the handle bar 20 between the pair of holding members 30. Further, the front opening 62 is formed to be located at a position further forward than the portion of the handle bar 20 between the pair of holding members 30. Thus, the user can easily confirm the attachment position of the handle bar 20 through the upper opening 61 and the front opening 62 with the auxiliary cover 70 detached from the handle device 4.

The upper cover 60 is fixed to the lower cover 50 by three bolts 63, for example. The user can detach the upper cover 60 from the handle device 4 by removing the three bolts 63 from three attachment holes 52 (Fig. 8(c)) formed in the lower cover 50.

Fig. 8(c) shows the handle device 4 after the upper cover 60 is detached from the handle device 4 of Fig. 8(b). As shown in Fig. 8(c), the lower cover 50 extends in the left-and-right direction H while being curved in the front-and-rear direction L between the pair of switch units 80 similarly to the upper cover 60. A lower opening 53 is formed in a center portion of the lower cover 50. The support pole 13 (Fig. 3(a)) of the handle crown 10 is inserted into the lower opening 53.

When the upper cover 60 is detached from the handle device 4, the pair of fixing portions 11 of the handle crown 10, the pair of holding members 30 and portions of the handle bar 20 in their periphery are exposed. In this state, as indicated by outlined arrows in Fig. 9(a), the user can change the attachment position of the handle bar 20 from the position corresponding to the second positional relationship to the position corresponding to the first positional relationship. Further, as indicated by outlined arrows in Fig. 9(b), the user can change the attachment position of the handle bar 20 from the position corresponding to the first positional relationship to the position corresponding to the second positional relationship.

As shown in Fig. 8(c), a plurality (two in the present example) of connection portions 59 are formed at the lower cover 50. Further, a plurality of connection pieces 29 respectively corresponding to the plurality of connection portions 59 of the lower cover 50 are provided at the handle bar 20. The plurality of connection portions 59 of the lower cover 50 are respectively connected to the plurality of connection pieces 29 of the handle bar 20 by a plurality of bolts. Thus, the lower cover 50 is attached to the handle bar 20. Therefore, the user can also detach the lower cover 50 from the handle bar 20 by detaching the bolts connecting the plurality of connection pieces 29 to the plurality of connection portions 59.

### (5) Attachment of Electronic Apparatus and the Like to Handle Bar

As described above, in the handle device 4, the auxiliary cover 70 and the upper cover 60 of the handle cover 40 can be detached in steps. As shown in Fig. 8(b), with the auxiliary cover 70 detached, portions of the handle bar 20 between the pair of holding members 30 is exposed from the upper opening 61. In this case, the user can attach a portable terminal, an electronic apparatus such as a video camera, or a holding device for holding accessories such as a small-size storing container, a mirror and a compass to the portions of the handle bar 20 between the pair of holding members 30 through the upper opening 61. Further, the front opening 62 is formed in the upper cover 60 of the present example. Thus, the user can effectively utilize the front opening 62 as a working space when attaching them to the handle bar 20. Therefore, the holding device is easily attached.

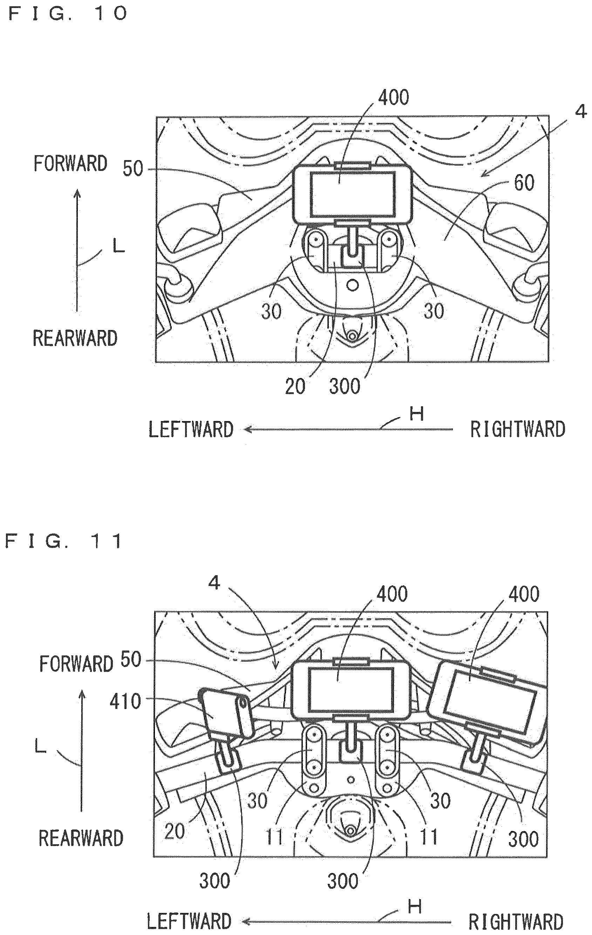

Fig. 10 is a diagram showing an example in which the holding device is provided at the portion of the handle bar 20 between the pair of holding members 30. In the example of Fig. 10, the holding device 300 is attached to the portions of the handle bar 20 between the pair of holding members 30. Further, the portable terminal 400 is held by the holding device 300.

In this manner, the user can easily attach an electronic apparatus or accessories to a position where they are easily viewed and operated by the user seated on the seat 5 of Fig. 1 by detaching the auxiliary cover 70 and attaching the holding device 300 to the handle bar 20.

In addition to the above-mentioned example, with the auxiliary cover 70 and the upper cover 60 detached, a plurality of portions of the handle bar 20 between the pair of switch units 80 is exposed over a wide range as shown in Fig. 8(c). In this case, the user can attach a plurality of holding devices to the plurality of portions of the handle bar 20 between the pair of switch units 80.

Fig. 11 is a diagram showing an example in which the plurality of holding devices are provided at the plurality of portions of the handle bar 20 between the pair of switch units 80. In the example of Fig. 11, three holding devices 300 are attached to three portions of the handle bar 20 between the pair of switch units 80. Further, two portable terminals 400 are respectively held by the two holding devices 300, and a video camera 410 is held by the remaining holding device 300.

In this manner, the user can easily attach a plurality of electronic apparatuses or accessories to positions where they are easily viewed and operated by the user seated on the seat 5 of Fig. 1 by detaching the auxiliary cover 70 and the upper cover 60 and attaching the plurality of holding devices 300 to the handle bar 20.

### (6) Effects

(a) In the above-mentioned motorcycle 100, the user can attach the pair of lower holders 31 to the pair of fixing portions 11 of the handle crown 10 according to the first positional relationship or the second positional relationship. Thus, the position of the handle bar 20 in the inclination direction I can be changed.

In the case where attaching each lower holder 31 to each fixing portion 11 according to the first positional relationship, the user inserts the first convex portion 32a of the lower holder 31 into the first concave portion 11a of the fixing portion 11 and inserts the second convex portion 32c of the lower holder 31 into the second fixing hole 11c of the fixing portion 11. Thus, orientations of the pair of lower holders 31 are automatically determined with a simple operation. In this state, the user can install the handle bar 20 and the pair of upper holders 35 at the pair of lower holders 31 and fix the pair of upper holders 35 and the pair of lower holders 31 to the pair of fixing portions 11 of the handle crown 10 by the two bolts BL. In this case, the user can simultaneously attach the handle bar 20 to the holding member 30 and fix the holding member 30 to the fixing portion 11.

On the other hand, in the case where attaching each lower holder 31 to each fixing portion 11 according to the second positional relationship, the user inserts the first convex portion 32a of the lower holder 31 into the second concave portion 11f of the fixing portion 11 and inserts the second convex portion 32c of the lower holder 31 into the third fixing hole 11d of the fixing portion 11. Thus, orientations of the pair of lower holders 31 are automatically determined with a simple operation. In this state, the user can install the handle bar 20 and the pair of upper holders 35 at the pair of lower holders 31 and fix the pair of upper holders 35 and the pair of lower holders 31 to the pair of fixing portions 11 of the handle crown 10 by the two bolts BL. In this case, the user can simultaneously attach the handle bar 20 to the holding member 30 and fix the holding member 30 to the fixing portion 11.

Further, the above-mentioned holding member 30 is formed such that the center axis 21 of the held handle bar 20 is located in the range A2 between the first convex portion 32a and the center of the second convex portion 32c in the inclination direction I. Thus, the distance D2 between the attachment positions of the handle bar 20 according to the first and second positional relationships is larger than the distance D1 between the center axes of the second and third fixing holes 11c, 11d.

As a result, the user can change the attachment position of the handle bar 20 with a simple operation and increase an amount of change of the attachment position without an increase of the size of the handle crown 10.
(b) The above-mentioned handle bar 20 is curved such that the both ends of the handle bar 20 extend obliquely rearward while being attached to the handle crown 10. The handle bar 20 is attached to the handle crown 10 by the two bolts BL while being sandwiched by the pair of upper holders 35 and the pair of lower holders 31. Therefore, the user can rotate the handle bar 20 about the center axis 21 of the portion of the handle bar 20 held by the holding member 30 by adjusting the fastening degree of the two bolts BL. Thus, the positions of the pair of grips 90 in the top-and-bottom direction V can be changed.
(c) As described above, the inner peripheral surface of each of the first to fourth fixing holes 11b to 11e formed in each fixing portion 11 has the female thread corresponding to the male thread formed at the shank BLb of each of the two bolts BL for attaching the handle bar 20. Thus, the user can attach the handle bar 20 to the handle crown 10 without using a nut. Therefore, the number of components of the handle device 4 is reduced, and the user can more easily change the attachment position of the handle bar 20.

### (7) Other Embodiments

(a) While the first concave portion 11a and the second concave portion 11f into which the first convex portion 32a of the lower holder 31 is inserted are formed in each fixing portion 11 of the handle crown 10 in the above-mentioned embodiment, the present invention is not limited to this. A first hole and a second hole into which the first convex portion 32a of the lower holder 31 can be inserted may be formed in the fixing portion 11 instead of the first concave portion 11a and the second concave portion 11f.
   In this case, in the case where attaching each lower holder 31 to each fixing portion 11 according to the first positional relationship, the user can insert the first convex portion 32a of the lower holder 31 into the first hole of the fixing portion 11. Further, in the case where attaching each lower holder 31 to each fixing portion 11 according to the second positional relationship, the user can insert the first convex portion 32a of the lower holder 31 into the second hole of the fixing portion 11.
(b) In each fixing portion 11 of the handle crown 10, a first convex portion and a second convex portion may be formed instead of the first concave portion 11a and the second concave portion 11f. In this case, the first convex portion 32a of each lower holder 31 is changed to a concave portion. Thus, in the case where attaching each lower holder 31 to each fixing portion 11 according to the first positional relationship, the user can insert the first convex portion of the fixing portion 11 into the concave portion of the lower holder 31. Further, in the case where attaching each lower holder 31 to each fixing portion 11 according to the second positional relationship, the user can insert the second convex portion of the fixing portion 11 into the concave portion of the lower holder 31.
(c) While an orientation of the upper holder 35 in an inclination direction I with respect to each fixing portion 11 is constant regardless of the positional relationship between the lower holder 31 and the fixing portion 11 in the above-mentioned embodiment, the present invention is not limited to this. The orientation of the upper holder 35 in the inclination direction I with respect to each fixing portion 11 may be changed according to the positional relationship of the lower holder 31 with the fixing portion 11.
   For example, in the case where each lower holder 31 is attached to the fixing portion 11 according to the second positional relationship, the upper holder 35 may be provided such that the bolt insertion portion 35B is located at a position further forward than the bolt insertion portion 35A in the front-and-rear direction L. In this case, a shank BLb of one bolt BL is attached to the second fixing hole 11c of the fixing portion 11 through the fourth through hole 36b of the upper holder 35 and the second through hole 32d of the lower holder 31. Further, a shank BLb of another bolt BL is attached to the fourth fixing hole 11e of the fixing portion 11 through the third through hole 36a of the upper holder 35 and the first through hole 32b of the lower holder 31.
(d) In the above-mentioned embodiment, in the handle crown 10, the coupler 12 connected to the pair of fork tubes 2a, 2b and the support pole 13 including the pair of fixing portions 11 are formed of a single member. However, the present invention is not limited to this. The coupler 12 and the support pole 13 may be separately formed. Further, the pair of fixing portions 11 of the support pole 13 may be separately formed.
(e) While the present invention is applied to the motorcycle in the above-mentioned embodiment, the invention is not limited to this. The present invention may be applied to another vehicle such as a four-wheeled automobile, a motor tricycle or an ATV (All Terrain Vehicle).

### (8) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the handle crown 10 is an example of a handle crown, the handle bar 20 is an example of a handle bar, the holding member 30 is an example of a holding member, the two bolts BL are examples of a fastening member, the fixing portion 11 is an example of a fixing portion, the front-and-rear direction L is an example of a vehicle front-and-rear direction and the inclination direction I is an example of one direction.

Further, the first concave portion 11a is an example of a first guide portion, the first fixing hole 11b is an example of a first fixing hole, the second fixing hole 11c is an example of a second fixing hole, the third fixing hole 11d is an example of a third fixing hole, the fourth fixing hole 11e is an example of a fourth fixing hole, the second concave portion 11f is an example of a second guide portion, and the upper holder 35 is an example of an upper holder.

Further, the lower holder 31 is an example of a lower holder, the first convex portion 32a is an example of a portion to be guided, the first through hole 32b is an example of a first through hole, the second convex portion 32c is an example of a convex portion, the second through hole 32d is an example of a second through hole, the third through hole 36a is an example of a third through hole, the fourth through hole 36b is an example of a fourth through hole, the center axis 21 of the handle bar 20 is an example of a center axis of a handle bar, the two bolts BL are respectively examples of first and second shaft members, and the motorcycle 100 is an example of a straddled vehicle.

Further, the bolt BL is an example of a bolt, the head BLa and the shank BLb of the bolt BL are respectively examples of a head and a shank of a bolt, the handle cover 40 is an example of a handle cover, the lower cover 50 is an example of a lower cover, the upper cover 60 is an example of an upper cover, the auxiliary cover 70 is an example of an auxiliary cover, the upper opening 61 is an example of an upper opening, the front opening 62 is an example of a front opening, the portable terminal 400 is an example of a first apparatus, the portable terminal 400 and a video camera 410 are examples of a second apparatus, and the holding device 300 is an example of first and second apparatus holding structures.

### INDUSTRIAL APPLICABILITY

The present invention can be effectively utilized for various types of straddled vehicles.

## Claims

1. A straddled vehicle (100) comprising:
a handle crown (10);
a handle bar (20);
a pair of left and right holding members (30) configured to hold the handle bar (20) at the handle crown (10); and
a pair of fastening members configured to fasten the pair of holding members (30) to the handle crown (10), wherein
the handle crown (10) has a pair of left and right fixing portions (11) to which the pair of holding members (30) are respectively fixed,
a first guide portion (11a), a first fixing hole (11b), a second fixing hole (11c), a third fixing hole (11d), a fourth fixing hole (11e) and a second guide portion (11f) are arranged in order in each of the pair of fixing portions (11) in one direction, which is a vehicle front-and-rear direction in a vehicle plan view,
each of the pair of holding members (30) includes an upper holder (35) and a lower holder (31) that sandwich the handle bar (20) from above and below,
a portion (32a) to be guided, a first through hole (32b), a convex portion (32c) and a second through hole (32d) are arranged in order in the lower holder (31) in the one direction,
a third through hole (36a) and a fourth through hole (36b) are arranged in order in the upper holder (35) in the one direction;
a center axis (21) of the handle bar (20) is located between a center of the convex portion (32c) and the portion (32a) to be guided in the one direction;
the lower holder (31) is selectively attachable to the handle crown (10) according to a first positional relationship or a second positional relationship;
each of the pair of fastening members includes first and second shaft members (BL);
in the first positional relationship, the portion (32a) to be guided is positioned at the first guide portion (11a), the convex portion (32c) is inserted into the second fixing hole (11c), the first shaft member (BL) is inserted into the first fixing hole (11b) through one of the third and fourth through holes (36a, 36b), and the first through hole (32b), and the second shaft member (BL) is inserted into the third fixing hole (11d) through another one of the third and fourth through holes (36a, 36b), and the second through hole (32d), and
in the second positional relationship, the portion (32a) to be guided is positioned at the second guide portion (11f), the convex portion (32c) is inserted into the third fixing hole (11d), the first shaft member (BL) is inserted into the second fixing hole (11c) through one of the third and fourth through holes (36a, 36b), and the second through hole (32d), and the second shaft member (BL) is inserted into the fourth fixing hole (11e) through another one of the third and fourth through holes (36a, 36b), and the first through hole (32b).

2. The straddled vehicle (100) according to claim 1, wherein
the center axis (21) of the handle bar (20) is located between the center of the convex portion (32c) and the first through hole (32b) in the one direction.

3. The straddled vehicle (100) according to claim 1 or 2, wherein
the first and second guide portions (11a, 11f) are formed in a concave shape, and
the portion (32a) to be guided is formed in a convex shape.

4. The straddled vehicle (100) according to any one of claims 1 to 3, wherein
each of the first and second shaft members (BL) is a bolt having a head and a shank,
inner peripheral surfaces of the first, second, third and fourth fixing holes (11b, 11c, 11d, 11e) have female threads, and
the shanks of the first and second shaft members (BL) have male threads corresponding to the female threads.

5. The straddled vehicle (100) according to any one of claims 1 to 4, further comprising a handle cover (40), wherein
the handle cover (40) includes
a lower cover (50) attached to the handle bar (20) to be located at a position further downward than the handle bar (20), and
an upper cover (60) located at a position further upward than the handle bar (20).

6. The straddled vehicle (100) according to claim 5, wherein
the upper cover (60) has an upper opening (61) at a position further upward than a portion of the handle bar (20) between the pair of holding members (30).

7. The straddled vehicle (100) according to claim 6, further comprising a first apparatus holding structure (300) capable of holding a first apparatus (400), wherein
the first apparatus holding structure (300) is attachable to a portion of the handle bar (20) exposed from the upper opening (61).

8. The straddled vehicle (100) according to claim 7, wherein
the upper cover (60) has a front opening (62) at a position further forward than the portion of the handle bar (20) between the pair of holding members (30).

9. The straddled vehicle (100) according to any one of claims 6 to 8, wherein
the handle cover (40) further includes an auxiliary cover (70) detachably attached to at least one of the upper cover (60) and the lower cover (50) to close the opening.

10. The straddled vehicle (100) according to any one of claims 5 to 9, wherein
the upper cover (60) is configured to be detachable from the lower cover (50).

11. The straddled vehicle (100) according to claim 10, further comprising a second apparatus holding structure (300) capable of holding a second apparatus (410), wherein
the second apparatus holding structure (300) is attachable to an exposed portion of the handle bar (20) with the upper cover (60) detached from the lower cover (50).

## Patentansprüche

1. Ein Spreiztyp-Fahrzeug (100), das folgende Merkmale aufweist:
einen Lenkerkopf (10);
eine Lenkerstange (20);
ein Paar aus einem linken und einem rechten Haltebauteil (30), die ausgebildet sind, um die Lenkerstange (20) an dem Lenkerkopf (10) zu halten; und
ein Paar Befestigungsbauteile, die ausgebildet sind, um das Paar von Haltebauteilen (30) an dem Lenkerkopf (10) zu befestigen, wobei:
der Lenkerkopf (10) ein Paar aus einem linken und einem rechten Fixierabschnitt (11) aufweist, an denen das Paar von Haltebauteilen (30) jeweils fixiert ist,
ein erster Führungsabschnitt (11a), ein erstes Fixierloch (11b), ein zweites Fixierloch (11c), ein drittes Fixierloch (11d), ein viertes Fixierloch (11e) und ein zweiter Führungsabschnitt (11f) in dieser Reihenfolge in jedem des Paars von Fixierabschnitten (11) in einer Richtung angeordnet sind, die in einer Fahrzeugdraufsicht eine Vorne-und Hinten-Richtung des Fahrzeugs ist,
jedes des Paars von Haltebauteilen (30) eine obere Halterung (35) und eine untere Halterung (31) aufweist, die die Lenkerstange (20) sandwichartig von oben und unten umgeben,
ein zu führender Abschnitt (32a), ein erstes Durchgangsloch (32b), ein konvexer Abschnitt (32c) und ein zweites Durchgangsloch (32d) in dieser Reihenfolge in der einen Richtung in der unteren Halterung (31) angeordnet sind,
ein drittes Durchgangsloch (36a) und ein viertes Durchgangsloch (36b) in dieser Reihenfolge in der einen Richtung in der oberen Halterung (35) angeordnet sind;
eine Mittelachse (21) der Lenkerstange (20) zwischen einer Mitte des konvexen Abschnitts (32c) und dem zu führenden Abschnitt (32a) in der einen Richtung angeordnet ist;
die untere Halterung (31) selektiv gemäß einer ersten Positionsbeziehung oder einer zweiten Positionsbeziehung an dem Lenkerkopf (10) anbringbar ist;
jedes des Paars von Befestigungsbauteilen ein erstes und ein zweites Wellenbauteil (BL) aufweist;
in der ersten Positionsbeziehung der zu führende Abschnitt (32a) an dem ersten Führungsabschnitt (11a) positioniert ist, der konvexe Abschnitt (32c) in das zweite Fixierloch (11c) eingeführt ist, das erste Wellenbauteil (B11) durch eines des dritten und vierten Durchgangslochs (36a, 36b) und das erste Durchgangsloch (32b) in das erste Fixierloch (11b) eingeführt ist und das zweite Wellenbauteil (BL) durch ein anderes des dritten und vierten Durchgangslochs (36a, 36b) und das zweite Durchgangsloch (32b) in das dritte Fixierloch (11d) eingeführt ist, und
in der zweiten Positionsbeziehung der zu führende Abschnitt (32a) an dem zweiten Führungsabschnitt (11f) positioniert ist, der konvexe Abschnitt (32c) in das dritte Fixierloch (11d) eingeführt ist, das erste Wellenbauteil (BL) durch eines des dritten und vierten Durchgangslochs (36a, 36b) und das zweite Durchgangsloch (32b) in das zweite Fixierloch (11c) eingeführt ist und das zweite Wellenbauteil (BL) durch ein anderes des dritten und vierten Durchgangslochs (36a, 36b) und das erste Durchgangsloch (32b) in das vierte Fixierloch (11 e) eingeführt ist.

2. Das Grätschtypfahrzeug (100) gemäß Anspruch 1, bei dem:
die Mittelachse (21) der Lenkerstange (20) zwischen der Mitte des konvexen Abschnitts (32c) und dem ersten Durchgangsloch (32b) in der einen Richtung angeordnet ist.

3. Das Grätschtypfahrzeug (100) gemäß Anspruch 1 oder 2, bei dem:
der erste und der zweite Führungsabschnitt (11a, 11f) in einer konkaven Form gebildet sind und
der zu führende Abschnitt (32a) in einer konvexen Form gebildet ist.

4. Das Grätschtypfahrzeug (100) gemäß einem der Ansprüche 1 bis 3, bei dem:
jedes des ersten und zweiten Wellenbauteils (BL) ein Bolzen mit einem Kopf und einem Schaft ist,
innere Umfangsoberflächen des ersten, zweiten, dritten und vierten Fixierlochs (11b, 11c, 11d, 11 e) Innengewinde aufweisen und
die Schäfte des ersten und des zweiten Wellenbauteils (BL) Außengewinde aufweisen, die den Innengewinden entsprechen.

5. Das Grätschtypfahrzeug (100) gemäß einem der Ansprüche 1 bis 4, das ferner eine Lenkerabdeckung (40) aufweist, wobei:
die Lenkerabdeckung (40) folgende Merkmale aufweist:
eine untere Abdeckung (50), die an der Lenkerstange (20) angebracht ist, um an einer Position weiter unten als die Lenkerstange (20) angeordnet zu sein, und
eine obere Abdeckung (60), die an einer Position weiter oben als die Lenkerstange (20) angeordnet ist.

6. Das Grätschtypfahrzeug (100) gemäß Anspruch 5, bei dem:
die obere Abdeckung (60) eine obere Öffnung (61) an einer Position weiter oben als ein Abschnitt der Lenkerstange (20) zwischen dem Paar von Haltebauteilen (30) aufweist.

7. Das Grätschtypfahrzeug (100) gemäß Anspruch 6, das ferner eine Erstvorrichtungshaltestruktur (300) aufweist, die in der Lage ist, eine erste Vorrichtung (400) zu halten, wobei:
die Erstvorrichtungshaltestruktur (300) an einem Abschnitt der Lenkerstange (20), der von der oberen Öffnung (61) freiliegt, anbringbar ist.

8. Das Grätschtypfahrzeug (100) gemäß Anspruch 7, bei dem:
die obere Abdeckung (60) eine vordere Öffnung (62) an einer Position weiter vorne als der Abschnitt der Lenkerstange (20) zwischen dem Paar von Haltebauteilen (30) aufweist.

9. Das Grätschtypfahrzeug (100) gemäß einem der Ansprüche 6 bis 8, bei dem:
die Lenkerabdeckung (40) ferner eine Hilfsabdeckung (70) aufweist, die lösbar an zumindest einer der oberen Abdeckung (60) und der unteren Abdeckung (50) angebracht ist, um die Öffnung zu schließen.

10. Das Grätschtypfahrzeug (100) gemäß einem der Ansprüche 5 bis 9, bei dem:
die obere Abdeckung (60) ausgebildet ist, um von der unteren Abdeckung (50) lösbar zu sein.

11. Das Grätschtypfahrzeug (100) gemäß Anspruch 10, das ferner eine Zweitvorrichtungshaltestruktur (300) aufweist, die in der Lage ist, eine zweite Vorrichtung (410) zu halten, wobei:
die Zweitvorrichtungshaltestruktur (300) an einem freiliegenden Abschnitt der Lenkerstange (20) anbringbar ist, wobei die obere Abdeckung (60) von der unteren Abdeckung (50) gelöst ist.

## Revendications

1. Véhicule à enfourcher (100), comprenant:
une couronne de guidon (10);
un guidon (20);
une paire d'éléments de maintien gauche et droit (30) configurés pour maintenir le guidon (20) sur la couronne de poignée (10); et
une paire d'éléments de fixation configurés pour fixer la paire d'éléments de maintien (30) à la couronne de guidon (10),
dans lequel
la couronne de guidon (10) présente une paire de parties de fixation gauche et droite (11) auxquelles sont fixés respectivement la paire d'éléments de maintien (30),
une première partie de guidage (11a), un premier trou de fixation (11b), un deuxième trou de fixation (11c), un troisième trou de fixation (11d), un quatrième trou de fixation (11e) et une deuxième partie de guidage (11f) sont disposés dans l'ordre dans chacune de la paire de parties de fixation (11) dans une direction qui est une direction avant et arrière du véhicule en vue en plan du véhicule,
chacun de la paire d'éléments de maintien (30) comporte un support supérieur (35) et un support inférieur (31) qui prennent en sandwich le guidon (20) depuis le haut et depuis le bas,
une partie (32a) à guider, un premier trou traversant (32b), une partie convexe (32c) et un deuxième trou traversant (32d) sont disposés dans l'ordre dans le support inférieur (31) dans l'une direction,
un troisième trou traversant (36a) et un quatrième trou traversant (36b) sont disposés dans l'ordre dans le support supérieur (35) dans l'une direction;
un axe central (21) du guidon (20) est situé entre un centre de la partie convexe (32c) et la partie (32a) à guider dans l'une direction;
le support inférieur (31) peut être fixé de manière sélective à la couronne de guidon (10) selon un premier rapport de position ou un deuxième rapport de position;
chacun de la paire d'éléments de fixation comporte des premier et deuxième éléments d'arbre (BL);
dans le premier rapport de position, la partie (32a) à guider est positionnée sur la première partie de guidage (11a), la partie convexe (32c) est introduite dans le deuxième trou de fixation (11c), le premier élément d'arbre (BL) est introduit dans le premier trou de fixation (11b) à travers l'un des troisième et quatrième trous traversants (36a, 36b) et le premier trou traversant (32b), et le deuxième élément d'arbre (BL) est introduit dans le troisième trou de fixation (11d) à travers un autre des troisième et quatrième trous traversants (36a, 36b), et le deuxième trou traversant (32d), et
dans le deuxième rapport de position, la partie (32a) à guider est positionnée sur la deuxième partie de guidage (11f), la partie convexe (32c) est introduite dans le troisième trou de fixation (11d), le premier élément d'arbre (BL) est introduit dans le deuxième trou de fixation (11c) à travers l'un des troisième et quatrième trous traversants (36a, 36b) et le deuxième trou traversant (32d), et le deuxième élément d'arbre (BL) est introduit dans le quatrième trou de fixation (11e) à travers un autre des troisième et quatrième trous traversants (36a, 36b) et le premier trou traversant (32b).

2. Véhicule à enfourcher (100) selon la revendication 1, dans lequel
l'axe central (21) du guidon (20) est situé entre le centre de la partie convexe (32c) et le premier trou traversant (32b) dans l'une direction.

3. Véhicule à enfourcher (100) selon la revendication 1 ou 2, dans lequel
les première et deuxième parties de guidage (11a, 11f) sont formées dans une forme concave, et
la partie à guider (32a) présente une forme convexe.

4. Véhicule à enfourcher (100) selon l'une quelconque des revendications 1 à 3, dans lequel
chacun des premier et deuxième éléments d'arbre (BL) est un boulon présentant une tête et une tige,
les surfaces périphériques intérieures des premier, deuxième, troisième et quatrième trous de fixation (11b, 11c, 11d, 11e) présentent des filets femelles, et
les tiges des premier et deuxième éléments d'arbre (BL) présentent des filets mâles correspondant aux filets femelles.

5. Véhicule à enfourcher (100) selon l'une quelconque des revendications 1 à 4, comprenant par ailleurs un couvercle de guidon (40), dans lequel
le couvercle de guidon (40) comporte
un couvercle inférieur (50) fixé au guidon (20) à situer en une position plus vers le bas que le guidon (20), et
un couvercle supérieur (60) situé dans une position plus vers le haut que le guidon (20).

6. Véhicule à enfourcher (100) selon la revendication 5, dans lequel
le couvercle supérieur (60) présente une ouverture supérieure (61) en une position plus vers le haut que la partie du guidon (20) entre la paire d'éléments de maintien (30).

7. Véhicule à enfourcher (100) selon la revendication 6, comprenant par ailleurs une première structure de maintien d'appareil (300) à même de maintenir un premier appareil (400), dans lequel
la première structure de maintien d'appareil (300) peut être fixée à une partie du guidon (20) exposée à partir de l'ouverture supérieure (61).

8. Véhicule à enfourcher (100) selon la revendication 7, dans lequel
le couvercle supérieur (60) présente une ouverture avant (62) en une position plus vers l'avant que la partie du guidon (20) entre la paire d'éléments de maintien (30).

9. Véhicule à enfourcher (100) selon l'une quelconque des revendications 6 à 8, dans lequel
le couvercle de guidon (40) comporte par ailleurs un couvercle auxiliaire (70) fixé de manière amovible à au moins l'un parmi le couvercle supérieur (60) et le couvercle inférieur (50) pour fermer l'ouverture.

10. Véhicule à enfourcher (100) selon l'une quelconque des revendications 5 à 9, dans lequel
le couvercle supérieur (60) est configuré pour être amovible du couvercle inférieur (50).

11. Véhicule à enfourcher (100) selon la revendication 10, comprenant par ailleurs une deuxième structure de maintien d'appareil (300) à même de supporter un deuxième appareil (410), dans lequel
la deuxième structure de maintien d'appareil (300) peut être fixée à une partie exposée du guidon (20) avec le couvercle supérieur (60) enlevé du couvercle inférieur (50).
